# EUROPEAN PATENT APPLICATION

(11) **EP 4 772 980 A1**
(43) Date of publication of application: **08.07.2026**
(21) Application number: 24858681.0
(22) Date of filing: 29.08.2024
(51) Int. Cl.: G06F 3/0484

(54) **PAGE INTERACTION METHOD AND APPARATUS, AND DEVICE AND STORAGE MEDIUM**

(30) Priority: 30.08.2023 CN 202311111766
(71) Applicant: BEIJING YOUZHUJU NETWORK TECHNOLOGY CO. LTD., Beijing 101299 (CN)
(72) Inventor: WEI, Wen, Beijing 100028 (CN)
(74) Representative: Isarpatent
(86) International application number: PCT/CN2024/115529
(87) International publication number: WO 2025/045150

(57) **Abstract**

The present disclosure provides a page interaction method and apparatus, a device, and a storage medium. The method includes: displaying target account information on a first page; in response to an account follow operation triggered for the target account information, displaying, on the first page, a preset entry for a target user account corresponding to the target account information; and in response to a trigger operation for the preset entry, displaying a target object corresponding to the target user account. In the embodiments of the present disclosure, the preset entry for the concerned target user account is displayed through the account follow operation triggered for the target account information displayed on the first page, and the display of the target object corresponding to the target user account is triggered based on the preset entry.

## Description

### CROSS-REFERENCE TO RELATED APPLICATION(S)

The present application claims priority to Chinese Patent Application No. 202311111766.2, filed on August 30, 2023, and entitled "PAGE INTERACTION METHOD AND APPARATUS, DEVICE, AND STORAGE MEDIUM", which is incorporated herein by reference in its entirety.

### FIELD

The present disclosure relates to the field of data processing and, in particular, to a page interaction method and apparatus, a device, and a storage medium.

### BACKGROUND

With the continuous development of computer technologies, more and more page interaction manners are supported by various types of applications, and accordingly, users' requirements for page interaction manners become more and more diversified. For example, account following belongs to one of the page interaction manners, which provides users with a function of establishing a binding relationship with a user account of interest.

In order to satisfy users' growing requirements for diversified page interaction, how to further enrich page interaction manners is an urgent technical issue to be solved.

### SUMMARY

In order to solve the above technical issue, embodiments of the present disclosure provide a page interaction method.

In a first aspect, the present disclosure provides a page interaction method, including:
displaying target account information on a first page;
in response to an account follow operation triggered for the target account information, displaying a preset entry for a target user account corresponding to the target account information on the first page; where the account follow operation is used to establish a binding relationship between a current user account and the target user account; and
in response to a trigger operation for the preset entry, displaying a target object corresponding to the target user account.

In an optional implementation, the target account information includes virtual resource information, and the method further includes:
in response to the account follow operation, binding a virtual resource corresponding to the virtual resource information to the current user account; where the virtual resource is used to perform a preset interaction operation for the target object corresponding to the target user account.

In an optional implementation, the displaying, on the first page, a preset entry for a target user account corresponding to the target account information in response to an account follow operation triggered for the target account information includes:
in response to the account follow operation triggered for the target account information, displaying a follow prompt pop-up window on the first page; where the virtual resource information is displayed in the follow prompt pop-up window; and
displaying the preset entry for the target user account corresponding to the target account information in the follow prompt pop-up window.

In an optional implementation, the target account information includes object acquisition data information corresponding to the target user account, and the method further includes:
in response to the account follow operation, switching the object acquisition data information on the first page to display information of a first target object corresponding to the target user account; where the first target object belongs to the target object corresponding to the target user account, and the first target object is a current explanation object of the target user account in a live streaming state, or a target object of which object acquisition data under the target user account in a non-live streaming state reaches a preset condition.

In an optional implementation, the target account information includes live streaming identification information, and the live streaming identification information is used to identify that the target user account is in a live streaming state, and the displaying a target object corresponding to the target user account in response to a trigger operation for the preset entry includes:

in response to the trigger operation for the preset entry, displaying a live room page corresponding to the target user account, and displaying the target object corresponding to the target user account on the live room page.

In an optional implementation, the displaying target account information on a first page includes:
displaying, on an object acquisition success page, target account information corresponding to a current successfully acquired object.

In an optional implementation, the first page includes an operation result page where a preset interaction operation is completed for the target object corresponding to the target user account, an account follow control is displayed on the first page, and the displaying, on the first page, a preset entry for a target user account corresponding to the target account information in response to an account follow operation triggered for the target account information includes:
in response to a trigger operation for the account follow control, switching the account follow control on the first page to display the preset entry for the target user account corresponding to the target account information.

In a second aspect, the present disclosure provides a page interaction apparatus, including:
a first display module, configured to display target account information on a first page;
a second display module, configured to, in response to an account follow operation triggered for the target account information, display a preset entry for a target user account corresponding to the target account information on the first page; where the account follow operation is used to establish a binding relationship between a current user account and the target user account; and
a third display module, configured to, in response to a trigger operation for the preset entry, display a target object corresponding to the target user account.

In a third aspect, the present disclosure provides a computer-readable storage medium, where instructions are stored in the computer-readable storage medium, and the instructions, when executed by a terminal device, cause the terminal device to implement the above method.

In a fourth aspect, the present disclosure provides a page interaction device, including: a memory, a processor, and a computer program stored on the memory and executable on the processor, where the processor, when executing the computer program, implements the above method.

In a fifth aspect, the present disclosure provides a computer program product, including a computer program/instruction, where the computer program/instruction, when executed by a processor, implements the above method.

Compared with the prior art, the technical solutions provided by embodiments of the present disclosure have at least the following advantages.

Embodiments of the present disclosure provide a page interaction method. First, target account information is displayed on a first page; in response to an account follow operation triggered for the target account information, a preset entry for a target user account corresponding to the target account information is displayed on the first page, where the account follow operation is used to establish a binding relationship between a current user account and the target user account; and in response to a trigger operation for the preset entry, a target object corresponding to the target user account is displayed. In the embodiments of the present disclosure, the preset entry for the concerned target user account is displayed by the account follow operation triggered for the target account information displayed on the first page, and the display of the target object corresponding to the target user account is triggered based on the preset entry.

### BRIEF DESCRIPTION OF THE DRAWINGS

The drawings herein, which are incorporated in and constitute a part of this specification, illustrate embodiments consistent with the present disclosure and, together with the description, serve to explain the principles of the present disclosure.

In order to more clearly explain the technical solutions in the embodiments of the present disclosure or in the prior art, the following will briefly introduce the drawings that need to be used in the description of the embodiments or the prior art. Obviously, for those of ordinary skill in the art, other drawings may be obtained based on these drawings without paying any creative effort.
FIG. 1 is a flowchart of a page interaction method provided by an embodiment of the present disclosure;
FIG. 2 is a schematic diagram of an object acquisition success page provided by an embodiment of the present disclosure;
FIG. 3 is a schematic diagram of a first page provided by an embodiment of the present disclosure;
FIG. 4 is a schematic diagram of a live room page provided by an embodiment of the present disclosure;
FIG. 5 is a schematic diagram of another first page provided by an embodiment of the present disclosure;
FIG. 6 is a schematic diagram of a structure of a page interaction apparatus provided by an embodiment of the present disclosure; and
FIG. 7 is a schematic diagram of a structure of a page interaction device provided by an embodiment of the present disclosure.

### DETAILED DESCRIPTION OF EMBODIMENTS

In order to understand the above objects, features and advantages of the present disclosure more clearly, the solutions of the present disclosure will be further described below. It should be noted that, in case of no conflict, the embodiments of the present disclosure and the features in the embodiments may be combined with each other.

Many specific details are set forth in the following description to fully understand the present disclosure, but the present disclosure may also be implemented in other ways different from those described herein; obviously, the embodiments in the specification are part of the embodiments of the present disclosure, but not all of the embodiments.

With the continuous development of computer technologies, more and more page interaction manners are supported by various types of applications, and accordingly, users' requirements for the page interaction manners become more and more diversified. For example, account following belongs to one of the page interaction manners, which provides users with a function of establishing a binding relationship with a user account of interest.

In order to satisfy users' growing requirements for diversified page interaction, how to further enrich page interaction manners is an urgent technical issue to be solved.

To this end, embodiments of the present disclosure provide a page interaction method. First, target account information is displayed on a first page; in response to an account follow operation triggered for the target account information, a preset entry for a target user account corresponding to the target account information is displayed on the first page, where the account follow operation is used to establish a binding relationship between a current user account and the target user account; and in response to a trigger operation for the preset entry, a target object corresponding to the target user account is displayed. In the embodiments of the present disclosure, the preset entry for the concerned target user account is displayed through the account follow operation triggered for the target account information displayed on the first page, and the display of the target object corresponding to the target user account is triggered based on the preset entry. It may be seen that, in the embodiments of the present disclosure, the page interaction manners are enriched for the user account follow function, thereby improving users' page interaction experience.

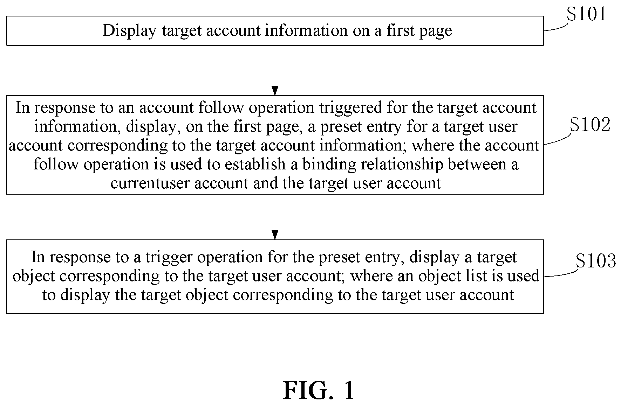

Based on this, an embodiment of the present disclosure provides a page interaction method. FIG. 1 is a flowchart of a page interaction method provided by an embodiment of the present disclosure, and the method specifically includes the following steps.

S101: target account information is displayed on a first page.

The page interaction method provided by the embodiments of the present disclosure may be applied to a client, for example, the client may include a client deployed on a smartphone, a client deployed on a tablet computer, etc.

In the embodiments of the present disclosure, the first page may be any page, for example, a commodity object purchase success page, an order details page, an order verification success page, etc.

The target account information includes account-related information of a target user account, which may specifically include account attribute information such as a user avatar and an account name of the target user account, and may also include virtual resource information associated with the target user account, such as a coupon, a red envelope, a coin, an integral, etc. In addition, it may also include object acquisition data information of the target user account, such as a commodity purchase quantity, ranking information, a rate of positive reviews, etc.

In an optional implementation, it is assumed that the first page is an object acquisition success page, then on the object acquisition success page, target account information corresponding to a current successfully acquired object is displayed. The current successfully acquired object may be a commodity object that has been successfully purchased by the current user account for the last time, which may specifically be a local service object, a physical commodity object, etc.

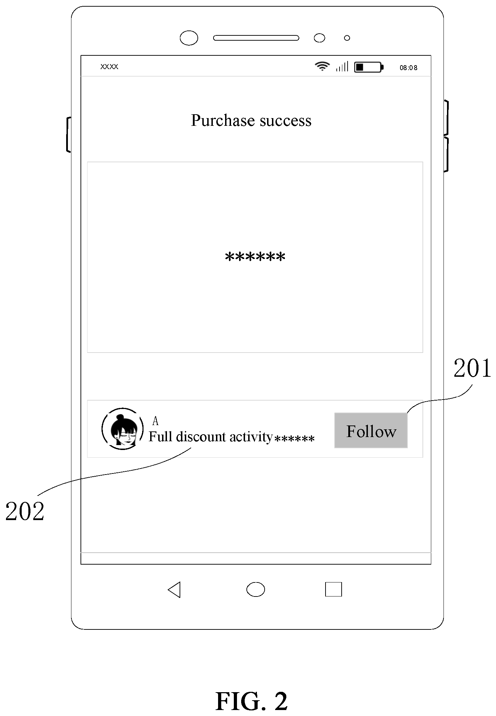

FIG. 2 is a schematic diagram of an object acquisition success page provided by an embodiment of the present disclosure. The target account information is displayed on the object acquisition success page, where the target account information includes a user avatar, an account name, etc., of the target user account.

S102: in response to an account follow operation triggered for the target account information, a preset entry for the target user account corresponding to the target account information is displayed on the first page.

The account follow operation is used to establish a binding relationship between a current user account and the target user account.

The account follow operation triggered for the target account information may include a preset trigger operation, such as a double-click operation and a click operation triggered in the display area of the target account information, and may also include a trigger operation for a follow control in the display area of the target account information, etc.

In an optional implementation, the target account information and an account follow control are displayed on the first page, and in response to the trigger operation for the account follow control, the binding relationship between the target user account corresponding to the target account information and the current user account is established to represent that the current user account has followed the target user account, and the account follow control on the first page is switched and displayed to the preset entry for the target user account.

The preset entry for the target user account is used to enter a related page of the target user account, so that the current user may further understand related information of the target user account. Specifically, the related page of the target user account may include a page where the target object corresponding to the target user account is located, such as a window page of the target user account, a live room page of the target user account, etc., and may also include a personal homepage of the target user account, etc.

In the embodiments of the present disclosure, there is no limitation on a display style, a display position, etc. of the preset entry on the first page.

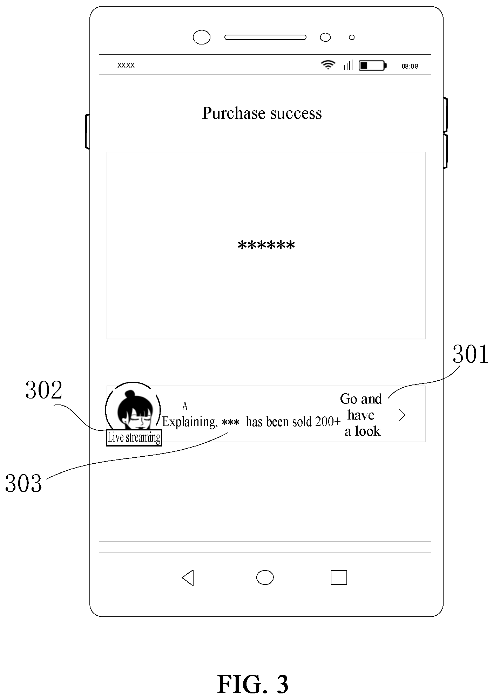

FIG. 3 is a schematic diagram of a first page provided by an embodiment of the present disclosure, where the target account information and a preset entry 301 are displayed on the first page. Specifically, when a trigger operation for an account follow control 201 on the object acquisition success page shown in FIG. 2 is received, the account follow control 201 on the object acquisition success page is switched to the preset entry 301 on the first page to display shown in FIG. 3.

In an optional implementation, the first page may include an operation result page where a preset interaction operation is completed for the target object corresponding to the target user account, where the preset interaction operation may include a commodity object acquisition operation, such as a commodity object placing operation, an order verification operation, etc.

It is assumed that the preset interaction operation is the commodity object placing operation, then the operation result page is a commodity object purchase success page corresponding to the commodity object placing operation, that is, after completing one commodity object placing operation, the target account information of the target user account corresponding to the commodity object placing operation is displayed on the commodity object purchase success page corresponding to the commodity object placing operation. For example, information (that is, the target account information) of the user account to which the commodity object that has been successfully purchased this time belongs is displayed on the commodity object purchase success page, and the target account information displayed on the commodity object purchase success page supports triggering the account follow operation, that is, the user may trigger the account follow operation for the target user account based on the target account information displayed on the commodity object purchase success page.

In addition, if the preset interaction operation is the commodity object placing operation, the operation result page may also be an order details page corresponding to the commodity object placing operation, that is, after completing one commodity object placing operation, when the order details page is displayed for the first time, the target account information of the target user account corresponding to the commodity object placing operation is displayed on the order details page. For example, information (that is, the target account information) of the user account to which the commodity object that has been successfully purchased for the last time belongs is displayed on the order details page, and the target account information displayed on the order details page supports triggering the account follow operation, that is, the user may trigger the account follow operation for the target user account based on the target account information displayed on the order details page.

It is assumed that the preset interaction operation is the order verification operation, then the operation result page is an order verification success page corresponding to the order verification operation, that is, after completing one order verification operation, information (that is, the target account information) of the user account to which the order corresponding to the order verification operation belongs is displayed on the order verification success page corresponding to the order verification operation, and the target account information displayed on the order verification success page supports triggering the account follow operation, that is, the user may trigger the account follow operation for the target user account based on the target account information displayed on the order verification success page.

S103: in response to a trigger operation for the preset entry, a target object corresponding to the target user account is displayed.

In the embodiments of the present disclosure, the target object may be an object in a commodity object display list corresponding to the target user account, which may specifically be a commodity object in a to-be-sold commodity object display list of the target user account in a live streaming process, or a commodity object in a commodity object display list in a commodity window of the target user account in a non-live streaming state. The target object corresponding to the target user account may be any one or more commodity objects in the commodity object display list corresponding to the target user account.

In the embodiments of the present disclosure, the first page includes an operation result page where a preset interaction operation is completed for the target object corresponding to the target user account.

In practical applications, when a trigger operation for the preset entry corresponding to the target user account on the first page is received, a related page (such as a live room page or a window page, etc.) of the target user account is jumped to from the first page, and the target object corresponding to the target user account is displayed on the related page.

In an optional implementation, the target account information may further include live streaming identification information, and the live streaming identification information is used to identify that the target user account is in a live streaming state, such as the first page shown in FIG. 3, and the target account information displayed on the first page further includes live streaming identification information 302 of "live streaming".

In response to the trigger operation for the preset entry corresponding to the target user account, a live room page corresponding to the target user account is first displayed, and then the target object corresponding to the target user account is displayed on the live room page. The target object is an object in a to-be-sold commodity object display list of a current live room.

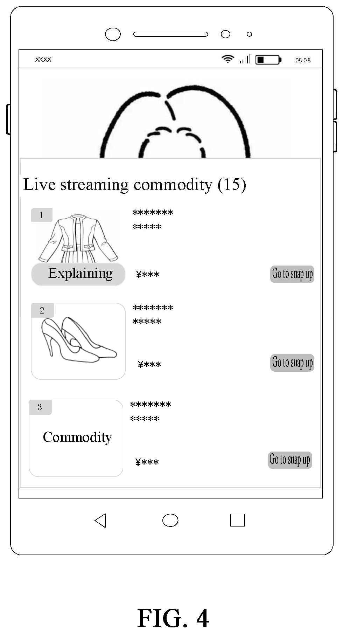

FIG. 4 is a schematic diagram of a live room page provided by an embodiment of the present disclosure, where a commodity object display list is displayed on the live room page, and the commodity object display list is displayed on the live room page in a form of a half-screen panel.

In practical applications, when a trigger operation for the preset entry 301 on the first page shown in FIG. 3 is received, if it is determined that the target user account is in the live streaming state, the live room page corresponding to the target user account is jumped to and displayed from the first page shown in FIG. 3, and the target object corresponding to the target user account is displayed on the live room page, such as the live room page shown in FIG. 4.

In another optional implementation, the target account information on the first page does not include the live streaming identification information, which indicates that the target user account is not currently in the live streaming state. In response to the trigger operation for the preset entry corresponding to the target user account, an object display page (such as a window page, etc.) corresponding to the target user account is displayed, and the target object is displayed on the object display page.

In the page interaction method provided by the embodiments of the present disclosure, first, the target account information is displayed on the first page; in response to the account follow operation triggered for the target account information, the preset entry for the target user account corresponding to the target account information is displayed on the first page, where the account follow operation is used to establish the binding relationship between the current user account and the target user account; and then, in response to the trigger operation for the preset entry, the target object corresponding to the target user account is displayed.

In the embodiments of the present disclosure, the preset entry for the concerned target user account is displayed through the account follow operation triggered for the target account information displayed on the first page, and the display of the target object corresponding to the target user account is triggered based on the preset entry. It may be seen that, in the embodiments of the present disclosure, the page interaction manners are enriched for the user account follow function, thereby improving users' page interaction experience.

In order to prompt the user of the features of the target user account, so that the user may trigger the account follow operation for the target user account, object acquisition data information, virtual resource information, etc., of the target user account may also be displayed on the object acquisition success page.

The virtual resource information has an association relationship with the target user account, and the virtual resource described by the virtual resource information is used to trigger a preset interaction operation for the target object corresponding to the target user account. The virtual resource may specifically be a coupon under the target user account, a virtual coin, etc.

Specifically, in response to the account follow operation for the target user account, the virtual resource corresponding to the displayed virtual resource information is bound to the current user account, where the virtual resource is used to perform a preset interaction operation for the target object corresponding to the target user account, such as an interaction operation of purchasing a commodity object with the coupon.

In the embodiments of the present disclosure, by displaying the virtual resource information included in the target account information on the first page, the features of the target user account may be effectively prompted, the page interaction manners may be further enriched, and the users' page interaction experience may be improved.

In an optional implementation, when the account follow operation triggered for the target account information is received, the displaying, on the first page, a preset entry for a target user account corresponding to the target account information may specifically include:

in response to the account follow operation triggered for the target account information, a follow prompt pop-up window is first displayed on the first page, where the virtual resource information is displayed in the follow prompt pop-up window; and the preset entry for the target user account corresponding to the target account information is displayed in the follow prompt pop-up window.

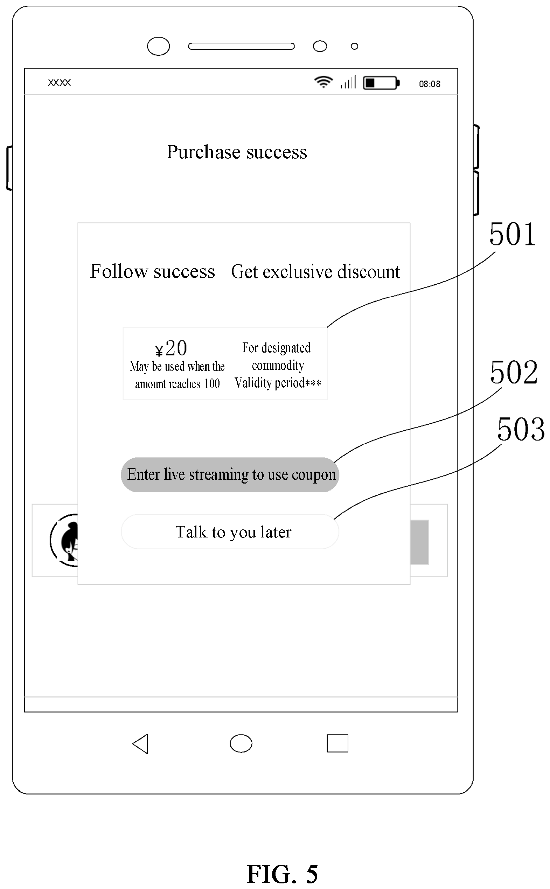

FIG. 5 is a schematic diagram of another first page provided by an embodiment of the present disclosure. When the account follow operation triggered for the target account information on the first page shown in FIG. 2 is received, if it is determined that the target account information includes the virtual resource information, such as the virtual resource information 202 shown in FIG. 2, the follow prompt pop-up window is displayed on the first page, as shown in a follow prompt pop-up window 501 shown in FIG. 5. The virtual resource information is displayed in the follow prompt pop-up window 501, and the preset entry 502 for the target user account corresponding to the target account information is also displayed in the follow prompt pop-up window 501.

In addition, a preset close control 503 may also be set in the follow prompt pop-up window 501 to support the current user to close the follow prompt pop-up window 501 by triggering the preset close control 503. At this time, the current user does not trigger the preset entry 502 for the target user account displayed in the follow prompt pop-up window 501.

In addition, in practical applications, in order to further enrich the page interaction manners and improve the user's attention to the target account information, object acquisition data information corresponding to the target user account may also be displayed on the first page, where the object acquisition data information may be a commodity purchase quantity, ranking information, a rate of positive reviews, etc. of the target user account. For example, the object acquisition data information may include information such as "the first place in a live streaming sales list", "accumulatively purchased by more than 4,000 people with accumulative transactions of more than 10,000", "accumulatively purchased by more than 4,000 people with a rate of positive reviews of 99%", and "more group purchase discounts may be obtained by following".

In practical applications, after the current user triggers the account follow operation for the target user account, the preset entry corresponding to the target user account is displayed on the first page. At this time, to enable the user to trigger an interaction operation for the preset entry, information of a first target object corresponding to the target user account may be displayed on the first page.

In the embodiments of the present disclosure, it is assumed that the target account information displayed on the first page includes the object acquisition data information corresponding to the target user account, and when the account follow operation for the target account information is received, the object acquisition data information displayed on the first page is switched to the information of the first target object corresponding to the target user account for display, where the first target object belongs to the target object corresponding to the target account information. It is assumed that the target user account is in the live streaming state, then the first target object is a current explanation object of the target user account in the live streaming state, for example, the first target object information may be "explaining, *** commodity has been sold 2000+"; or it is assumed that the target user account is in a non-live streaming state, then the first target object is a target object of which object acquisition data under the target user account in the non-live streaming state reaches a preset condition, for example, the object acquisition data includes sales data, then a target object of which sales data reaches the preset condition is determined as the first target object, and the information of the first target object may be displayed as "hot selling, ** commodity has been sold 5000+".

In the first page shown in FIG. 3, when the account follow operation in the first page shown in FIG. 2 is received, the object acquisition data information 202 shown in FIG. 2 is switched to the information of the first target object corresponding to the target user account for display. If it is determined that the target user account is currently in the live streaming state, the first target object is the current explanation object of the target user account in the live streaming state, such as the first target object information 303 shown in FIG. 3; and if the target user account is currently in the non-live streaming state, the first target object is the target object of which object acquisition data under the target user account in the non-live streaming state reaches the preset condition.

In the page interaction manner provided by the embodiments of the present disclosure, the information of the first target object in the target object corresponding to the target user account is revealed in advance to provide the user with characteristic information of the target user account, so that it is convenient for the user to trigger the display of the target object corresponding to the target user account due to the revealed information of the first target object, thereby achieving the effect of improving the user's page interaction experience.

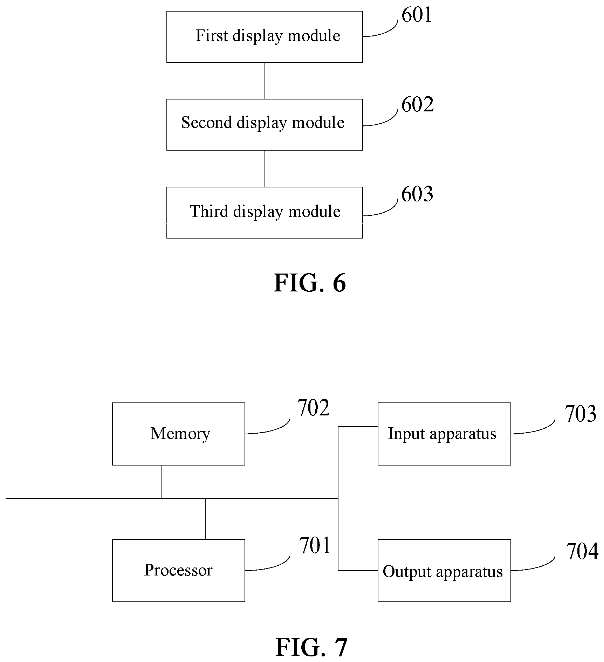

Based on the above method embodiments, the present disclosure further provides a page interaction apparatus. FIG. 6 is a schematic structural diagram of a page interaction apparatus provided by an embodiment of the present disclosure, and the apparatus includes:
a first display module 601, configured to display target account information on a first page;
a second display module 602, configured to, in response to an account follow operation triggered for the target account information, display a preset entry for a target user account corresponding to the target account information on the first page; where the account follow operation is used to establish a binding relationship between a current user account and the target user account; and
a third display module 603, configured to, in response to a trigger operation for the preset entry, display a target object corresponding to the target user account.

In an optional implementation, the target account information includes virtual resource information, and the apparatus further includes:
a binding module, configured to, in response to the account follow operation, bind a virtual resource corresponding to the virtual resource information to the current user account, where the virtual resource is used to perform a preset interaction operation for the target object corresponding to the target user account.

In an optional implementation, the second display module includes:
a first display sub-module, configured to, in response to the account follow operation triggered for the target account information, display a follow prompt pop-up window on the first page; where the virtual resource information is displayed in the follow prompt pop-up window; and
a second display sub-module, configured to display the preset entry for the target user account corresponding to the target account information in the follow prompt pop-up window.

In an optional implementation, the target account information includes object acquisition data information corresponding to the target user account, and the apparatus further includes:
a switching module, configured to, in response to the account follow operation, switch the object acquisition data information on the first page to display information of a first target object corresponding to the target user account; where the first target object belongs to the target object corresponding to the target user account, and the first target object is a current explanation object of the target user account in a live streaming state, or a target object of which object acquisition data under the target user account in a non-live streaming state reaches a preset condition.

In an optional implementation, the target account information includes live streaming identification information, and the live streaming identification information is used to identify that the target user account is in a live streaming state, and the third display module is further configured to:
in response to the trigger operation for the preset entry, display a live room page corresponding to the target user account, and display the target object corresponding to the target user account on the live room page.

In an optional implementation, the first display module is further configured to:
display, on an object acquisition success page, target account information corresponding to a current successfully acquired object.

In an optional implementation, the first page includes an operation result page where a preset interaction operation is completed for the target object corresponding to the target user account, an account follow control is displayed on the first page, and the second display module is further configured to:
in response to a trigger operation for the account follow control, switch the account follow control on the first page to display the preset entry for the target user account corresponding to the target account information.

In the page interaction method provided by the embodiments of the present disclosure, first, the target account information is displayed on the first page; in response to the account follow operation triggered for the target account information, the preset entry for the target user account corresponding to the target account information is displayed on the first page, where the account follow operation is used to establish the binding relationship between the current user account and the target user account; and in response to the trigger operation for the preset entry, the target object corresponding to the target user account is displayed.

In the embodiments of the present disclosure, the preset entry for the concerned target user account is displayed through the account follow operation triggered for the target account information displayed on the first page, and the display of the target object corresponding to the target user account is triggered based on the preset entry. It may be seen that, in the embodiments of the present disclosure, the page interaction manners are enriched for the user account follow function, thereby improving users' page interaction experience.

In addition to the above methods and apparatuses, embodiments of the present disclosure further provide a computer-readable storage medium, where instructions are stored in the computer-readable storage medium, and the instructions, when executed by a terminal device, cause the terminal device to implement the page interaction method according to the embodiments of the present disclosure.

An embodiment of the present disclosure further provides a computer program product, including a computer program/instruction, where the computer program/instruction, when executed by a processor, implements the page interaction method according to the embodiments of the present disclosure.

In addition, an embodiment of the present disclosure further provides a page interaction device, as shown in FIG. 7, which may include:
a processor 701, a memory 702, an input apparatus 703 and an output apparatus 704. The number of processors 701 in the page interaction device may be one or more, and one processor is taken as an example in FIG. 7. In some embodiments of the present disclosure, the processor 701, the memory 702, the input apparatus 703 and the output apparatus 704 may be connected through a bus or in other ways, and connection through a bus is taken as an example in FIG. 7.

The memory 702 may be used to store software programs and modules, and the processor 701 executes various functional applications and data processing of the page interaction device by running the software programs and modules stored in the memory 702. The memory 702 may mainly include a program storage area and a data storage area, where the program storage area may store an operating system, an application program required by at least one function, etc. In addition, the memory 702 may include a highspeed random access memory or a non-volatile memory, such as at least one magnetic disk storage device, a flash memory device, or other volatile solid-state storage devices. The input apparatus 703 may be used to receive input digital or character information, and generate a signal input related to user settings and function control of the page interaction device.

Specifically, in the present embodiment, the processor 701 will load an executable file corresponding to a process of one or more applications into the memory 702 according to the following instructions, and the processor 701 will run the application stored in the memory 702 to implement various functions of the above page interaction device.

The above descriptions are only specific embodiments of the present disclosure, so that those skilled in the art can understand or implement the present disclosure. Various modifications to these embodiments will be obvious to those skilled in the art, and general principles defined herein may be implemented in other embodiments without departing from the spirit or scope of the present disclosure. Therefore, the present disclosure will not be limited to these embodiments described herein, but rather to the widest scope consistent with the principles and novel features disclosed herein.

## Claims

1. A page interaction method, comprising:
displaying target account information on a first page;
in response to an account follow operation triggered for the target account information, displaying, on the first page, a preset entry for a target user account corresponding to the target account information, wherein the account follow operation is used to establish a binding relationship between a current user account and the target user account; and
in response to a trigger operation for the preset entry, displaying a target object corresponding to the target user account.

2. The method of claim 1, wherein the target account information comprises virtual resource information, and the method further comprises:
in response to the account follow operation, binding a virtual resource corresponding to the virtual resource information to the current user account, wherein the virtual resource is used to perform a preset interaction operation for the target object corresponding to the target user account.

3. The method of claim 2, wherein displaying, on the first page, the preset entry for the target user account corresponding to the target account information in response to the account follow operation triggered for the target account information comprises:
in response to the account follow operation triggered for the target account information, displaying a follow prompt pop-up window on the first page, wherein the virtual resource information is displayed in the follow prompt pop-up window; and
displaying the preset entry for the target user account corresponding to the target account information in the follow prompt pop-up window.

4. The method of claim 1, wherein the target account information comprises object acquisition data information corresponding to the target user account, and the method further comprises:
in response to the account follow operation, switching the object acquisition data information on the first page to display information of a first target object corresponding to the target user account, wherein the first target object belongs to the target object corresponding to the target user account, and the first target object is a current explanation object of the target user account in a live streaming state, or a target object of which object acquisition data under the target user account in a non-live streaming state reaches a preset condition.

5. The method of claim 1, wherein the target account information comprises live streaming identification information, and the live streaming identification information is used to identify that the target user account is in a live streaming state, and wherein displaying the target object corresponding to the target user account in response to the trigger operation for the preset entry comprises:
in response to the trigger operation for the preset entry, displaying a live room page corresponding to the target user account, and displaying the target object corresponding to the target user account on the live room page.

6. The method of claim 1, wherein displaying the target account information on the first page comprises:
displaying, on an object acquisition success page, target account information corresponding to a current successfully acquired object.

7. The method of claim 1, wherein the first page comprises an operation result page on which a preset interaction operation is completed for the target object corresponding to the target user account, and an account follow control is displayed on the first page, and wherein displaying, on the first page, the preset entry for the target user account corresponding to the target account information in response to the account follow operation triggered for the target account information comprises:
in response to a trigger operation for the account follow control, switching the account follow control on the first page to display the preset entry for the target user account corresponding to the target account information.

8. A page interaction apparatus, wherein the apparatus comprises:
a first display module, configured to display target account information on a first page;
a second display module, configured to display, in response to an account follow operation triggered for the target account information, a preset entry for a target user account corresponding to the target account information on the first page, wherein the account follow operation is used to establish a binding relationship between a current user account and the target user account; and
a third display module, configured to display, in response to a trigger operation for the preset entry, a target object corresponding to the target user account.

9. A computer-readable storage medium, wherein instructions are stored in the computer-readable storage medium, and the instructions, when executed by a terminal device, cause the terminal device to implement the method of any of claims 1 to 7.

10. A page interaction device, comprising: a memory, a processor, and a computer program stored on the memory and executable on the processor, wherein the processor, when executing the computer program, implements the method of any of claims 1 to 7.
